# EUROPÄISCHE PATENTSCHRIFT

(11) **EP 1 659 372 B1**
(45) Veröffentlichungstag und Bekanntmachung des Hinweises auf die Patenterteilung: **27.02.2008**
(21) Anmeldenummer: 05025118.0
(22) Anmeldetag: 17.11.2005
(51) Int. Cl.: G01D 5/20, G01D 5/22

(54) **Verfahren zum Auswerten von mittels eines Differenzialtransformators oder einer induktiven Halbbrücke durchgeführten Längenmessungen**
Method of evaluating length measurements made using a differential transformer or an inductive half-bridge
Procédé d'évaluation de mesures de longeurs employant un transformateur différentiel ou un demi-pont inductif

(30) Priorität: 18.11.2004 DE 102004055802
(43) Veröffentlichungstag der Anmeldung: 24.05.2006
(73) Patentinhaber: ADDI-DATA GMBH, 77833 Ottersweier (DE)
(72) Erfinder: Sohler, Jean-Louis, 67760 Gambsheim (FR)
(74) Vertreter: Lucht, Silvia

(56) Entgegenhaltungen:
- US-A- 4 450 443
- US-A- 4 857 919

## Beschreibung

### Stand der Technik

Die Erfindung geht aus von einem Verfahren zum Auswerten von Längenmessungen, welche mit einem Differentialtransformator oder einer induktiven Halbbrücke durchgeführt werden, nach dem Oberbegriff des Anspruchs 1.

Differentialtransformatoren und induktive Halbbrücken werden beispielsweise zur Längenmessung in der industriellen Fertigung, der Qualitätssicherung, der Prozesskontrolle, der Robotertechnik, der Luft- und Raumfahrt, der Automobilindustrie und bei hydraulischen und pneumatischen Anwendungen eingesetzt. Neben Längen oder Strecken können mit diesen Vorrichtungen auch die von Strecken ableitbaren Größen wie beispielsweise die Form eines Gegenstands bestimmt werden. Der Messbereich reicht vom Nanometerbereich bis in den Meterbereich. Das Prinzip der Längenmessung beruht darauf, dass eine mit einer sinusförmigen Erregerspannung gespeiste Primärspule über einen magnetisch wirksamen Kern mit einer oder zwei Sekundärspulen gekoppelt wird. Die Primärspule, die Sekundärspulen und der magnetisch wirksame Kern sind dabei in einen Messtaster integriert. Verändert der Kern bei der Längenmessung seine Position, so wirkt sich dies auf die magnetische Kopplung zwischen der Primärspule und die Sekundärspulen aus. Dabei ist die in der Sekundärspule induzierte Spannung linear von der Position des beweglichen Kerns abhängig. Die Spannung der Sekundärspule ist daher ein Maß für die Länge.

Da die Erregerspannung sinusförmig ist, ist die an der Sekundärspule induzierte Spannung ebenfalls sinusförmig. Da als Ausgangssignal ein Gleichspannungssignal gewünscht ist, wird die an der Sekundärspule induzierte Spannung bei den aus dem Stand der Technik bekannten Verfahren demoduliert. Hierzu wird ein Demodulator verwendet, der die Wechselspannung gleichrichtet und durch Integration einen Effektivwert oder Mittelwert bildet. Die Gleichrichtung und die Integration erfolgt dabei durch geeignete elektrische Bauteile. Anschließend wird das Ausgangssignal durch einen Analog-Digital-Wandler digitalisiert und zur weiteren Auswertung an einen Rechner weitergeleitet.

Solche Vorrichtungen sind aus der Patentschriften US-A-4 857 919 und US-A-4 450 443 bekannt.

Als nachteilig erweist sich bei derartigen Verfahren, dass zur Bestimmung eines Ausgangssignals über mehrere Perioden der Spannung der Sekundärspule gemittelt beziehungsweise integriert werden muss. Das Verfahren ist daher relativ langsam. Darüber hinaus wird das Ausgangssignal von der Güte der Erregerspannung beeinflusst. Oberwellen oder ein Offset reduzieren die Messgenauigkeit und führen zu einer Verfälschung des Ausgangssignals. Darüber hinaus wird das Ausgangssignal durch Effekte verfälscht, die beim Demodulieren auftreten.

Die Erfindung und ihre Vorteile

Demgegenüber hat das erfindungsgemäße Verfahren mit den Merkmalen des Anspruchs 1 den Vorteil, dass das Ausgangssignal ohne Demodulierung der sinusförmigen Spannung der Sekundärspule ermittelt wird. Verfälschungen oder Fehler, die beim Demodulieren auftreten, werden dadurch eliminiert. Das Ausgangssignal wird aus dem Mittelwert mindestens zweier Spannungswerte einer Periode der sinusförmigen Spannung der Sekundärspule abgeleitet. Hierzu wird beispielsweise der arithmetische, geometrische oder harmonische Mittelwert aus den Beträgen der Spannung zu mindestens zwei Zeitpunkten einer Periode bestimmt. Ein Offset oder Oberwellen verfälschen das Ausgangssignal daher nicht oder allenfalls in sehr geringem Maße.

Zu jeder Periode der sinusförmigen Spannung der Sekundärspule wird der Mittelwert bestimmt um ein Ausgangssignal zu erhalten. Das Verfahren ist damit wesentlich schneller und präziser als die aus dem Stand der Technik bekannten Verfahren, bei denen über mehrere Periode gemittelt wird.

Das Ausgangssignal wird mit einem Rechner weiterverarbeitet und häufig visualisiert. Das erfindungsgemäße Verfahren ermöglicht es, den induktiven Messtaster ohne den Umweg über zusätzliche elektrische Bauteile direkt an einen Rechner anzuschließen. Dieses Vorgehen ist kostengünstiger, weniger stark mit Messfehlern behaftet und bietet außerdem die Möglichkeit, eine Vielzahl unterschiedlicher Messtaster mit derselben Auswertehardware zu betreiben. Bei der Auswertehardware kann es sich beispielsweise um eine PC- oder PCI-Karte für einen Rechner oder um ein von einem Rechner unabhängiges Gerät handeln.

Nach einer vorteilhaften Ausgestaltung der Erfindung werden als Spannungswerte einer Periode der in der Sekundärspule induzierten Spannung das Maximum und Minimum bestimmt. Darüber hinaus besteht eine weitere vorteilhafte Vorgehensweise darin, zwei Spannungswerte nahe dem Maximum und zwei Spannungswerte nahe dem Minimum einer Periode der in der Sekundärspule induzierten Spannung mit sinusförmigem Verlauf zu bestimmten und aus diesen vier Werten einen Mittelwert zu bestimmen.

Nach einer weiteren vorteilhaften Ausgestaltung der Erfindung werden die Spannungswerte einer Periode, beispielsweise das Minimum und das Maximum, der Spannung der Sekundärspule digitalisiert, bevor der Mittelwert bestimmt wird. Aus den digitalisierten Werten kann anschließend in einem Logikbaustein der Mittelwert bestimmt werden. Bei einem derartigen Logikbaustein kann es sich beispielsweise um eine Programable Logic Device, kurz PLD, handeln.

Nach einer weiteren vorteilhaften Ausgestaltung der Erfindung wird zu der sinusförmigen Erregerspannung der Primärspule ebenfalls das Maximum und Minimum einer Periode bestimmt. Anschließend wird zunächst der Mittelwert aus dem Maximum und Minimum und schließlich der Quotient aus dem Mittelwert der Sekundärspule und dem Mittelwert der Primärspule gebildet. Der Quotient oder ein aus dem Quotienten abgeleiteter Wert wird als Ausgangssignal ausgegeben. Durch die Bildung des Quotienten wird der Spannungsabfall am relativ langen Kabel des Messtasters eliminiert. Außerdem werden Störungen, die die Erregerspannung und damit auch die Spannung der Sekundärspule beeinflussen, im Ausgangssignal eliminiert. Bei derartigen Störungen kann es sich beispielsweise um eine Drift oder um temperaturbedingte Schwankungen handeln.

Wie bei der Spannung der Sekundärspule können das Minimum und das Maximum einer Periode der Spannung der Primärspule digitalisiert werden, bevor der Mittelwert bestimmt wird. Aus den digitalisierten Werten kann anschließend in einem Logikbaustein der Mittelwert bestimmt und der Quotient aus den Mittelwerten der Sekundärspule und der Primärspule berechnet werden.

Nach einer weiteren vorteilhaften Ausgestaltung der Erfindung wird die sinusförmige Erregerspannung unter Verwendung eines Taktgebers erzeugt. Derselbe Taktgeber dient dazu, die Zeitpunkte vorzugeben, zu denen die Spannungswerte einer Periode der sinusförmigen Spannung der Sekundärspule und eventuell der Primärspule gemessen werden. Anhand dieses Taktgebers werden die Erregerspannung einerseits und die Zeitpunkte der Messung der Minima und Maxima der Spannung der Sekundärspule andererseits synchronisiert. Damit wird gewährleistet, dass die Spannung der Sekundärspule exakt im Minimum und Maximum oder nahe dem Maximum und Minimum bestimmt wird. Verfälschungen des Ausgangssignals, die auf einer Spannungsmessung zu einem anderen Zeitpunkt beruhen, können ausgeschlossen werden. Zur Synchronisation trägt außerdem bei, dass die Phasendifferenz zwischen der Erregerspannung und der Spannung der Sekundärspule unterdrückt wird. Hierzu ist beispielsweise eine Phase-Frequenz-Detektion-Schaltung eines Phase-Locked Loop vorgesehen.

Nach einer weiteren vorteilhaften Ausgestaltung der Erfindung ist die Frequenz des Taktgebers zur Bestimmung des Maximums und Minimums einer Periode der sinusförmigen Spannung der Sekundärspule ein ganzzahliges Vielfaches der Frequenz der Erregerspannung. Frequenzen mit derartigen Beziehungen zueinander erhält man beispielsweise durch Teilen einer vorgegebenen Frequenz. Diese wird beispielsweise durch einen Quarz vorgegebenen. Hierzu kann eine programmierbare Teilungseinrichtung, welche Teil der Auswertehardware ist, eingesetzt werden.

Die komplette Elektronik für einen induktiven Messtaster mit einem Oszillator, Verstärkern, einem Analog-Digital-Wandler und einem Logikbaustein ist in einer Auswertehardware, beispielsweise auf einer industrietauglichen PCI-Karte untergebracht. Sie verfügt je nach Ausführung über 8 oder 16 Kanäle zum Anschluss von Messtastern. Je nach Bedarf können auch mehr oder weniger Kanäle vorgesehen sein. Der Rechner, in den die Karte eingesetzt ist, speist alle Primärspulen der Messtaster mit den notwendigen Wechselspannungen.

Das Ausgangssignal, welches die Information über die gemessene Länge enthält, hat eine Auflösung von beispielsweise 16 Bit. Höhere Auflösungen sind möglich. Die Abtastfrequenzen liegen zwischen 2 und 50 Kilohertz. Auf der Auswertehardware sind die spezifischen Parameter verschiedener Modelle von induktiven Messtastern hinterlegt. Bei der Einrichtung muss lediglich aus einer Tabelle das jeweilige Modell ausgewählt werden. Die Einrichtung und Inbetriebnahme des Messtasters geschieht dann per Software. Zusätzlicher Aufwand bei der Installation, der Inbetriebnahme, der Handhabung und der Datenübertragung entfällt.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel einer Schaltung dargestellt, die nach dem erfindungsgemäße Verfahren arbeitet. Es zeigen:
- Figur 1: vereinfachtes Blockschaltbild einer PCI-Karte,
- Figur 2: Schaubild mit einer Periode der Spannung an der Sekundärspule und dem zeitlichen Verlauf des Taktgebers zur Messung des Maximums und Minimums der Spannung.

### Beschreibung des Ausführungsbeispiels

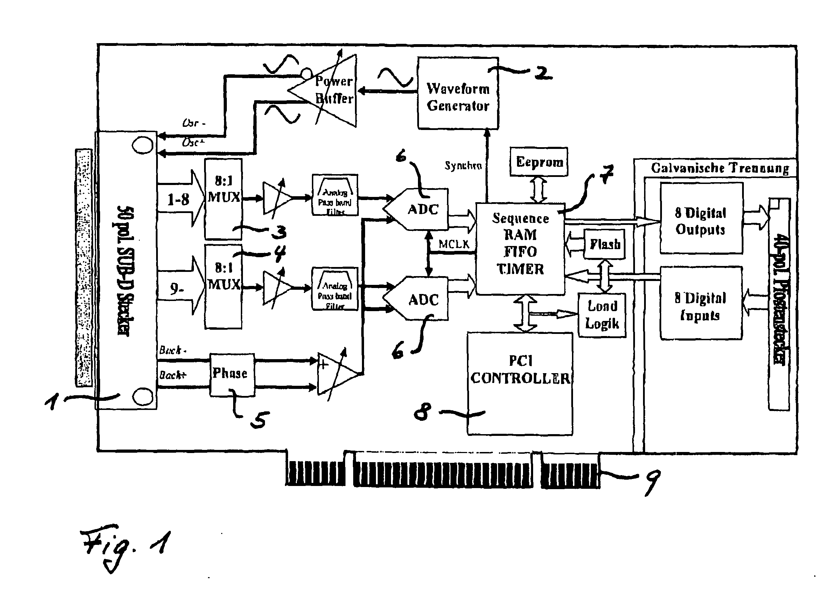

Figur 1 zeigt ein vereinfachtes Blockschaltbild einer PCI-Karte, welche mit den Elementen zur Durchführung des Verfahrens ausgestattet ist. Über den Messtaster-Stecker 1 werden die in der Zeichnung nicht dargestellten Messtaster mit der PCI-Karte verbunden. Auf der PCI-Karte befindet sich der Generator 2 zur Erzeugung der sinusförmigen Erregerspannung für die Primärspulen der Messtaster. Die Karte weist insgesamt 16 Eingänge für die Spannung der Sekundärspulen der Messtaster auf. Diese sind aufgeteilt in eine erste Gruppe von Eingängen 1 bis 8 mit der Bezugsziffer 3 und eine zweite Gruppe von Eingängen 9 bis 16 mit der Bezugsziffer 4. Außerdem ist ein Eingang 5 zur Messung der Erregerspannung vorgesehen. Diese dient dem Phasenabgleich zwischen der Spannung der Sekundärspulen und der Erregerspannung der Primärspulen. Eingänge 3, 4 und 5 sind mit zwei Analog-Digital-Wandlern 6 verbunden. Diese sind mit einem in der Zeichnung nicht dargestellten Taktgeber ausgestattet, der sowohl zur Erzeugung der Erregerspannung als auch zur Vorgabe der Zeitpunkte der Messung der Minima und Maxima der Spannung der Sekundärspule und der Erregerspannung dient. Diese Synchronisation zwischen den Analog-Digital-Wandlern 6 und dem Generator 2 ist in Figur 1 durch einen Pfeil mit der Beschriftung Synchro angedeutet. Die Analog-Digital-Wandler 6 digitalisieren die Spannungswerte der Sekundärspulen und der Primärspulen. Als Analog-Digital-Wandler können beispielsweise Sigma-Delta-Wandler verwendet werden. In der Programable Logic Device 7 werden die Mittelwerte aus dem Maximum und Minimum einer Periode der Spannung der Sekundärspule und der Primärspule bestimmt und der Quotient aus den beiden Mittelwerten gebildet. Zu jeder Periode der Spannung der Primärspule und der Sekundärspule wird der Quotient als Ausgangssignal über den PCI-Controller 8 und den PCI-Stecker 9 an den in der Zeichnung nicht dargestellten Rechner ausgegeben, in den die PCI-Karte eingesteckt ist. Das Ausgangssignal gibt Aufschluss über die gemessene Länge und kann im Rechner weiter aufbereitet, ausgewertet und auf dem Bildschirm des Rechners dargestellt werden.

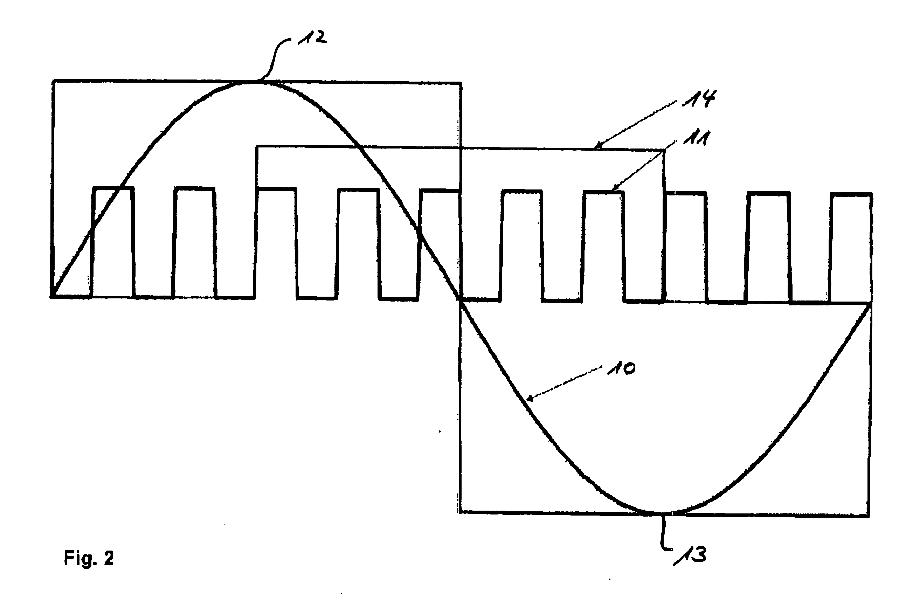

In dem Schaubild in Figur 2 sind eine Periode 10 der Spannung der Sekundärspule eines Messtasters und der zeitliche Verlauf 11 des Taktgebers dargestellt. Der Taktgeber wird in der Praxis auch als Clock bezeichnet. Aus dem Schaubild ergibt sich, dass die Periode der Spannung ein ganzzahliges Vielfaches der Periode des Taktgebers ist. Der Taktgeber sorgt dafür, dass die Spannung der Sekundärspule am Maximum 12 und Minimum 13 gemessen wird. Der aus den Beträgen der Spannung am Maximum 12 und Minimum 13 ermittelte Mittelwert ist in der Zeichnung mit der Bezugsziffer 14 gekennzeichnet.

Sämtliche Merkmale der Erfindung können sowohl einzeln als auch in beliebiger Kombination miteinander erfindungswesentlich sein.

### Bezugszahlen

- 1: Messtaster-Stecker
- 2: Generator
- 3: Eingänge 1 bis 8
- 4: Eingänge 9 bis 16
- 5: Eingang für die Erregerspannung
- 6: Analog-Digital-Wandler
- 7: Programable Logic Device
- 8: PCI-Controller
- 9: PCI-Stecker
- 10: Periode der Spannung der Sekundärspule
- 11: zeitlicher Verlauf des Taktgebers
- 12: Maximum
- 13: Minimum
- 14: Mittelwert

## Patentansprüche

1. Verfahren zum Auswerten von mittels eines Differentialtransformators oder einer induktiven Halbbrücke mit einer Primärspule, einer Sekundärspule, einem magnetischen Kern und einem Generator zur Erzeugung einer sinusförmigen Erregerspannung durchgeführten Längenmessungen,
**dadurch gekennzeichnet,**
**dass** von der in der Sekundärspule durch die Verschiebung des Kerns induzierten Spannung mit sinusförmigem Verlauf mindestens zwei Spannungswerte einer Periode bestimmt werden,
**dass** als Spannungswerte der in der Sekundärspule durch die Verschiebung des Kerns induzierten Spannung mit sinusförmigem Verlauf das Minimum und das Maximum einer Periode bestimmt werden, oder
**dass** als Spannungswerte der in der Sekundärspule durch die Verschiebung des Kerns induzierten Spannung mit sinusförmigem Verlauf zwei Spannungswerte nahe dem Maximum und zwei Spannungswerte nahe dem Minimum einer Periode bestimmt werden,
**dass** aus den Beträgen der mindestens zwei Spannungswerte ein Mittelwert gebildet wird,
und **dass** der Mittelwert oder ein aus dem Mittelwert abgeleiteter Wert als Ausgangssignal für die gemessene Länge ausgegeben wird.

2. Verfahren nach einem der vorhergehenden Ansprüche, **dadurch gekennzeichnet, dass** die Spannungswerte einer Periode der Spannung der Sekundärspule digitalisiert werden.

3. Verfahren nach einem der vorhergehenden Ansprüche, **dadurch gekennzeichnet, dass** von der sinusförmigen Erregerspannung der Primärspule das Maximum und Minimum jeweils einer Periode bestimmt werden,
dass aus dem Maximum und Minimum ein Mittelwert gebildet wird,
dass der Quotient aus dem Mittelwert der Sekundärspule und dem Mittelwert der Primärspule gebildet wird,
und dass der Quotient oder ein aus dem Quotienten abgeleiteter Wert als Ausgangssignal für die gemessene Länge ausgegeben wird.

4. Verfahren nach Anspruch 3, **dadurch gekennzeichnet, dass** das Minimum und das Maximum einer Periode der Erregerspannung der Primärspule digitalisiert werden.

5. Verfahren nach einem der vorhergehenden Ansprüche, **dadurch gekennzeichnet, dass** die Erregerspannung unter Verwendung eines Taktgebers erzeugt wird, und dass die Zeitpunkte, zu denen das Spannungswerte einer Periode der sinusförmigen Spannung der Sekundärspule bestimmt werden, durch denselben Taktgeber vorgegeben werden.

6. Verfahren nach Anspruch 5, **dadurch gekennzeichnet, dass** die Frequenz des Taktgebers zur Bestimmung der Spannungswerte einer Periode der sinusförmigen Spannung der Sekundärspule ein ganzzahliges Vielfaches der Frequenz der Erregerspannung ist.

7. Verfahren nach Anspruch 5 oder 6, **dadurch gekennzeichnet, dass** als Taktgeber ein Quarz verwendet wird, dessen Frequenz mittels einer Teilungseinrichtung heruntergeteilt und dadurch reduziert wird.

8. Verfahren nach einem der vorhergehenden Ansprüche, **dadurch gekennzeichnet, dass** die Phasendifferenz zwischen der Erregerspannung und der Spannung an der Sekundärspule eliminiert wird.

9. Verfahren nach Anspruch 8, **dadurch gekennzeichnet, dass** zur Eliminierung der Phasendifferenz eine Phase-Frequenz-Detektion-Schaltung verwendet.

## Claims

1. Method of evaluating length measurements determined by a differential transformer or an inductive half-bridge with a primary coil, a secondary coil, a magnetic core and a generator for the production of a sinusoidal excitation voltage,
**characterised in that**
of a voltage with sinusoidal path induced in the secondary coil by displacement of the core at least two voltage levels of a period are determined,
the minimum and the maximum of a period are determined as voltage levels of the voltage with sinusoidal path induced in the secondary coil by displacement of the core,
two voltage levels close to the maximum and two voltage levels close to the minimum of a period are determined as voltage levels of the voltage with sinusoidal path induced in the secondary coil by displacement of the core,
an average value is formed of the amounts of the at least two voltage levels,
and the average value or a value derived from the average value is provided as an output signal for the measured length.

2. Method according to one of the previous claims, **characterised in that** the voltage levels of a period of the voltage of the secondary coil are digitized.

3. Method according to one of the previous claims, **characterised in that** of the sinusoidal excitation voltage of the primary coil the maximum and minimum each of a period are determined,
an average value is formed from the maximum and minimum,
the quotient from the average value of the secondary coil and the average value of the primary coil is formed,
and the quotient or a value derived from the quotient is provided as an output signal for the measured length.

4. Method according to claim 3, **characterised in that** the minimum and the maximum of a period of the excitation voltage of the primary coil are digitized.

5. Method according to one of the previous claims, **characterised in that** the excitation voltage is produced using a pulse generator and that the points in time at which the voltage levels of a period of the sinusoidal voltage of the secondary coil are determined are prescribed by the same pulse generator.

6. Method according to claim 5, **characterised in that** the frequency of the pulse generator to determine the voltage levels of a period of the sinusoidal voltage of the secondary coil is an integral multiple of the frequency of the excitation voltage.

7. Method according to claim 5 or 6, **characterised in that** a crystal whose frequency is split and hence reduced by means of a splitting device is used as the pulse generator.

8. Method according to one of the previous claims, **characterised in that** the phase difference between the excitation voltage and the voltage at the secondary coil is eliminated.

9. Method according to claim 8, **characterised in that** a phase-frequency detection circuit is used to eliminate the phase difference.

## Revendications

1. Procédé d'évaluation de mesures de longueurs employant un transformateur différentiel ou un demi-pont inductif avec une bobine primaire, une bobine secondaire, un noyau magnétique et un générateur servant à créer une tension d'excitation sinusoïdale,
**caractérisé par le fait que**,
au moins deux valeurs de tension d'une période de la tension sinusoïdale induite dans la bobine secondaire par le déplacement du noyau sont déterminées,
le minimum et le maximum d'une période sont déterminés comme valeurs de tension de la tension sinusoïdale induite dans la bobine secondaire par le déplacement du noyau ou
que deux valeurs de tension proches du minimum et deux valeurs de tension proches du maximum d'une période sont déterminées comme valeurs de tension de la tension sinusoïdale induite dans la bobine secondaire par le déplacement du noyau,
une valeur moyenne est calculée à partir d'au moins ces deux valeurs de tension,
et que la valeur moyenne ou une valeur dérivée de la valeur moyenne est émise en tant que signal de sortie pour la longueur mesurée.

2. Procédé selon l'une quelconque des revendications précédentes, **caractérisé par le fait que** les valeurs de tension d'une période de la tension de la bobine secondaire sont numérisées.

3. Procédé selon l'une quelconque des revendications précédentes, **caractérisé par le fait que** le maximum et le minimum d'une période de la tension d'excitation sinusoïdale de la bobine primaire sont déterminés, qu'une valeur moyenne est déterminée à partir de ce maximum et de ce minimum,
que le quotient de la valeur moyenne de la bobine secondaire et de la valeur moyenne de la bobine primaire est calculé,
et que le quotient ou une valeur dérivée du quotient est émise en tant que signal de sortie pour la longueur mesurée.

4. Procédé selon la revendication 3, **caractérisé par le fait que** le minimum et le maximum d'une période de la tension d'excitation de la bobine primaire sont numérisés.

5. Procédé selon l'une quelconque des revendications précédentes, **caractérisé par le fait que** la tension d'excitation est créée par l'utilisation d'un générateur d'impulsions et que les moments auxquels les valeurs de tension d'une période de la tension sinusoïdale de la bobine secondaire sont déterminées sont prescrits par ce même générateur d'impulsions.

6. Procédé selon la revendication 5, **caractérisé par le fait que** la fréquence du générateur d'impulsions servant à déterminer les valeurs de tension d'une période de la tension sinusoïdale de la bobine secondaire est un multiple entier de la fréquence de la tension d'excitation.

7. Procédé selon la revendication 5 ou 6, **caractérisé par le fait qu'**un quartz dont la fréquence est subdivisée et donc réduite au moyen d'un dispositif de division est utilisé en tant que générateur d'impulsions

8. Procédé selon l'une quelconque des revendications précédentes, **caractérisé par le fait que** la différence de phase entre la tension d'excitation et la tension au niveau de la bobine secondaire est éliminée.

9. Procédé selon la revendication 8, **caractérisé par le fait qu'**un circuit de détection de fréquence et de phase est utilisé pour éliminer la différence de phase.
